# EUROPÄISCHE PATENTSCHRIFT

(11) **EP 3 607 417 B1**
(45) Veröffentlichungstag und Bekanntmachung des Hinweises auf die Patenterteilung: **03.05.2023**
(21) Anmeldenummer: 18715687.2
(22) Anmeldetag: 04.04.2018
(51) Int. Cl.: G06F 3/01, B25J 15/00, G06F 3/0346, G01C 19/00, B25J 13/08

(54) **DATENHANDSCHUH FÜR DIE FERNSTEUERUNG EINER ROBOTERHAND SOWIE VERFAHREN HIERZU**
DATA GLOVE FOR THE REMOTE CONTROL OF A ROBOT HAND, AND METHOD FOR SAME
GANT DE DONNÉES POUR LA COMMANDE À DISTANCE D'UNE MAIN ROBOTISÉE ET PROCÉDÉ CORRESPONDANT

(30) Priorität: 04.04.2017 DE 102017205698
(43) Veröffentlichungstag der Anmeldung: 12.02.2020
(73) Patentinhaber: Deutsches Zentrum für Luft- und Raumfahrt e.V., 51147 Köln (DE)
(72) Erfinder: MAIER, Maximilian, 82256 Fürstenfeldbruck (DE)
(74) Vertreter: dompatent von Kreisler Selting Werner - Partnerschaft von Patent- und Rechtsanwälten mbB
(86) Internationale Anmeldenummer: PCT/EP2018/058569
(87) Internationale Veröffentlichungsnummer: WO 2018/185140

(56) Entgegenhaltungen:
- DE-C1- 4 240 531
- US-A1- 2014 371 906

## Beschreibung

Die Erfindung betrifft einen Datenhandschuh für die Fernsteuerung einer Roboterhand sowie ein diesbezügliches Verfahren.

Aus dem Stand der Technik ist es bekannt, Roboterhände durch Telepräsenz zu steuern. Hierbei ist es zunächst notwendig, die Roboterhand an das zu greifende Objekt heranzuführen. Dies kann einerseits durch eine vordefinierte Bewegung erfolgen, so dass das Objekt anschließend durch den Benutzer gegriffen werden kann. Der Benutzer steuert hierbei die Greifbewegung der Roboterhand durch einen Datenhandschuh. Auch kann der komplette Greifvorgang per Telepräsenz durchgeführt werden. Hierbei kann das Heranfahren des Roboterarms, an dessen distalen Ende die Roboterhand befestigt ist, durch den Benutzer gesteuert werden. Hierzu wird zunächst unter Verwendung eines Controllers der Roboterarm an das zu greifende Objekt gefahren. Anschließend wird der Datenhandschuh verwendet, um die Greifbewegung durchzuführen. Der Controller für die Bewegung des Roboterarms wird hierbei nicht benötigt.

Bei beiden Verfahren kommt es häufig vor, dass der Roboterarm nicht die optimale Lage oder Position aufweist, um das Objekt sicher greifen zu können. Meistens ist es notwendig, den Roboterarm bzw. das Handgelenk der Roboterhand um einige Grad in x-, y- und z-Richtung zu drehen, um einen sicheren Griff zu ermöglichen. Dies erfolgt unter Verwendung des Controllers für die Bewegung des Roboterarms und führt somit zu einer umständlichen Bedienung.

Aufgabe der Erfindung ist es, ein Verfahren für die Fernsteuerung einer Roboterhand durch einen Datenhandschuh bereitzustellen, das eine vereinfachte Bedienung ermöglicht.

Die Lösung der Aufgabe erfolgt erfindungsgemäß durch die Merkmale des Anspruchs 1.

Der Datenhandschuh für die Fernsteuerung einer Roboterhand, die am distalen Ende eines Roboterarms befestigt ist, weist zunächst eine Vielzahl von Sensoren zum Erfassen gewünschter Greifbewegungen der Roboterhand auf. Diese entsprechen den Sensoren zum Erfassen von Greifbewegungen in Datenhandschuhen, die aus dem Stand der Technik bekannt sind.

Erfindungsgemäß ist zusätzlich zu diesen Sensoren mindestens ein zusätzlicher Sensor zum Erfassen einer gewünschten Bewegung des distalen Endes des Roboterarms, an dem die Roboterhand befestigt ist, und/oder einer translatorischen und/oder rotatorischen Bewegung der Roboterhand, die insbesondere keine Greifbewegung ist, vorgesehen.

Der Datenhandschuh kann somit dazu verwendet werden, die Position und/oder Lage der Roboterhand relativ zu dem zu greifenden Objekt zu korrigieren, so dass dieses sicher gegriffen werden kann. Hierzu ist es nicht notwendig, einen separaten Controller zu verwenden. Vielmehr weist der Datenhandschuh an sich den hierzu erforderlichen mindestens einen Sensor auf. Der Datenhandschuh ermöglicht somit eine vereinfachte Bedienung durch den Benutzer.

Es ist bevorzugt, dass der mindestens eine zusätzliche Sensor ein Beschleunigungssensor und/oder ein Gyroskop ist. Durch den mindestens einen zusätzlichen Sensor erfolgt ein Erfassen einer gewünschten translatorischen und/oder rotatorischen Bewegung des Roboterarms und/oder der Roboterhand.

Bevorzugt ist der Beschleunigungssensor ein dreiachsiger Beschleunigungssensor.

Durch den mindestens einen zusätzlichen Sensor erfolgt eine Bewegung der Roboterhand um eine x-, y- und z-Achse, deren Treffpunkt im Greifbereich der Roboterhand liegt. Dieser Greifbereich der Roboterhand wird durch die letzte Position des Roboterarms definiert. Anders ausgedrückt kann somit die Roboterhand durch den mindestens einen zusätzlichen Sensor im Datenhandschuh um eine Sphäre (d.h. um insgesamt drei Achsen) gedreht werden, wobei die Lage dieser Sphäre durch die letzte Position des Roboterarms und den Mittelpunkt des Greifbereichs der Roboterhand ermittelt wird. Die Roboterhand kann somit kreisend um das zu greifende Objekt bewegt werden. Der Mittelpunkt des Greifbereichs kann grundsätzlich frei gewählt werden. Er kann beispielsweise bei einer Roboterhand in der Mitte der Handfläche liegen. Jedoch liegt er nicht auf der Handfläche auf, sonder befindet sich schwebend in einem definierten Abstand von der Handfläche. Dieser Abstand kann beispielsweise anhand der Größe des zu greifenden Objekts verändert werden.

Erfindungsgemäß erfolgt zunächst ein Erfassen gewünschter Greifbewegungen der Roboterhand durch eine Vielzahl von Sensoren im Datenhandschuh. Dies entspricht der Funktion von aus dem Stand der Technik bekannten Datenhandschuhen zur Fernsteuerung einer Roboterhand.

Erfindungsgemäß erfolgt ein Erfassen einer gewünschten Bewegung des distalen Endes des Roboterarms, an dem die Roboterhand befestigt ist, durch mindestens einen zusätzlichen Sensor im Datenhandschuh. Alternativ oder zusätzlich kann eine translatorische und/oder rotatorische Bewegung der Roboterhand, die insbesondere keine Greifbewegung ist, durch den mindestens einen zusätzlichen Sensor im Datenhandschuh erfasst werden.

Es erfolgt ein Bewegen der Roboterhand um eine x-, y- und z-Achse, deren Treffpunkt im Greifbereich der Roboterhand liegt. Dieser Greifbereich wird durch die letzte Position des Roboterarms definiert.

Durch das erfindungsgemäße Verfahren kann somit die Bedienung einer Roboterhand durch einen Datenhandschuh vereinfacht werden. Die Gefahr für Fehlbedienungen kann ferner minimiert werden.

Im Folgenden wird eine bevorzugte Ausführungsform der Erfindung anhand einer Figur erläutert.

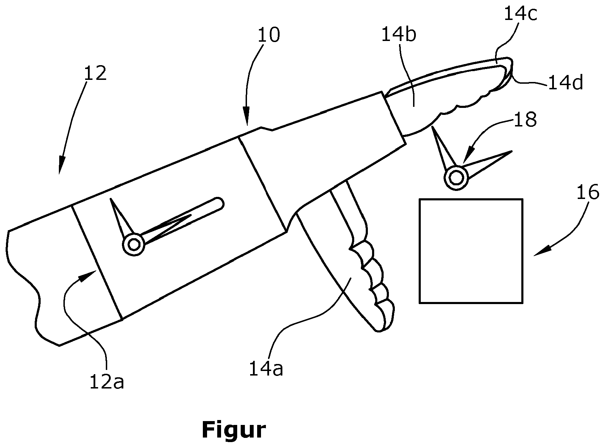

Die Figur zeigt eine Roboterhand 10, die am distalen Ende 12a eines Roboterarms 12 angebracht ist. Die Roboterhand 10 weist einen Daumen 14a sowie drei Finger 14b, 14c, 14d auf, durch die das Objekt 16 gegriffen werden kann. Im Mittelpunkt des Greifbereichs der Roboterhand 10 ist eine Sphäre 18 dargestellt, um die die Roboterhand 10 um das Objekt 16 herum kreisend bewegt werden kann.

Hierzu weist der erfindungsgemäße Datenhandschuh einen dreiachsigen Beschleunigungssensor und/oder ein Gyroskop auf. Durch diese Sensoren werden die gewünschten Bewegungen um die Sphäre 18, d.h. um die x-, y- und z-Achse, die sich im Mittelpunkt dieser Sphäre treffen, erfasst. Die Roboterhand 10 kann somit vor dem Greifvorgang relativ zum Objekt 16 optimal ausgerichtet werden. Es ist bevorzugt, dass erst anschließend der Greifvorgang durchgeführt wird.

## Patentansprüche

1. Verfahren zum Fernsteuern einer Roboterhand (10) mit einem Datenhandschuh, **gekennzeichnet durch** die folgenden Verfahrensschritte:
- Erfassen gewünschter Greifbewegungen der Roboterhand (10) durch eine Vielzahl von Sensoren im Datenhandschuh,
- Erfassen einer gewünschten Bewegung des distalen Endes (12a) des Roboterarms (12), an dem die Roboterhand (10) befestigt ist, und/oder einer translatorischen und/oder rotatorischen Bewegung der Roboterhand (10), die insbesondere keine Greifbewegung ist, durch mindestens einen zusätzlichen Sensor im Datenhandschuh,
- Bewegen der Roboterhand (10) um eine x-, y- und z-Achse, deren Treffpunkt im Greifbereich der Roboterhand (10) liegt, der durch die letzte Position des Roboterarms definiert wird, so dass die Roboterhand durch den mindestens einen zusätzlichen Sensor im Datenhandschuh um eine Sphäre, d. h. um die insgesamt drei Achsen, gedreht wird, wobei die Lage dieser Sphäre durch die letzte Position des Roboterarms und den Mittelpunkt des Greifbereichs der Roboterhand ermittelt wird, so dass die Roboterhand kreisend um das zu greifende Objekt (16) bewegt werden kann,
wobei der Mittelpunkt des Greifbereichs frei gewählt werden kann und sich schwebend in einem definierten Abstand von der Handfläche befindet, der anhand der Größe des zu greifenden Objekts veränderbar ist.

## Claims

1. A method for remote control of a robot hand (10) comprising a data glove, **characterized by** the following method steps:
- detecting desired gripping movements of the robot hand (10) by a plurality of sensors in the data glove,
- detecting a desired movement of the distal end (12a) of the robot arm (12) to which the robot hand (10) is mounted, and/or a translatory and/or rotatory movement of the robot hand (10), which in particular is no gripping movement, by at least one additional sensor in the data glove,
- moving the robot hand (10) about an x, y and z axis, the intersection point of which is in the gripping area of the robot hand (10) defined by the last position of the robot arm, so that the robot hand is rotated by the at least one additional sensor in the data glove about a sphere, i.e. about the total of three axes,
wherein the location of said sphere is determined by the last position of the robot arm and the center of the gripping area of the robot hand, so that the robot hand can be moved in circles about the object (16) to be gripped,
wherein the center of the gripping area can be freely selected and is located in a hovering manner at a defined distance from the palm of the hand, which distance can be varied according to the size of the object to be gripped.

## Revendications

1. Procédé permettant la commande à distance d'une main de robot (10) avec un gant de données, **caractérisé par** les étapes de procédé suivantes :
- détection de mouvements de préhension souhaités de la main de robot (10) par une pluralité de capteurs dans le gant de données,
- détection d'un mouvement souhaité de l'extrémité distale (12a) du bras de robot (12), à laquelle est fixée la main de robot (10), et/ou d'un mouvement de translation et/ou de rotation de la main de robot (10), lequel n'est en particulier pas un mouvement de préhension, par au moins un capteur supplémentaire dans le gant de données,
- déplacement de la main de robot (10) autour d'axes x, y et z dont le point de rencontre se trouve dans la zone de préhension de la main de robot (10), laquelle zone de préhension est définie par la dernière position du bras de robot,
de sorte que la main de robot, par l'intermédiaire de l'au moins un capteur supplémentaire dans le gant de données, est pivotée autour d'une sphère, c'est-à-dire autour des trois axes au total, dans lequel la position de ladite sphère est déterminée par la dernière position du bras de robot et le centre de la zone de préhension de la main de robot, de sorte que la main de robot peut être déplacée de manière circulaire autour de l'objet (16) à saisir,
dans lequel le centre de la zone de préhension peut être librement choisi et se trouve de manière suspendue à une distance définie de la paume, laquelle distance peut être modifiée en fonction de la taille de l'objet à saisir.
